# EUROPÄISCHE PATENTANMELDUNG

(11) **EP 2 159 762 A1**
(43) Veröffentlichungstag der Anmeldung: **03.03.2010**
(21) Anmeldenummer: 08105151.8
(22) Anmeldetag: 27.08.2008
(51) Int. Cl.: G07F 7/10, G06F 21/00, H04L 29/06

(54) **Chipkarten-basiertes Authentifikationsverfahren**

(71) Anmelder: Deutsche Telekom AG, 53113 Bonn (DE)
(72) Erfinder: Löhlein, Bernhard, 97837 Erlenbach (DE)

(57) **Zusammenfassung**

Die Erfindung betrifft ein Chipkarten-basiertes Authentifikationsverfahren mit Übermitteln (K4-2) einer Sitzungsnummer (SN) an eine Chipkarte, Berechnen eines kryptographischen Funktionswertes in Abhängigkeit von der Sitzungsnummer (SN) durch die Chipkarte und Übermitteln (K6-3) des kryptographischen Funktionswertes durch die Chipkarte an eine Kommunikationseinrichtung zur Authentifizierung gegenüber der Kommunikationseinrichtung.

## Beschreibung

Die vorliegende Erfindung betrifft das Gebiet der Authentifizierung gegenüber Netzwerkentitäten eines Kommunikationsnetzes mithilfe von Chipkarten.

Chipkarten wie beispielsweise Smartcards werden zunehmend für die Authentifizierung, die Erzeugung von qualifizierten digitalen Signaturen, die Verschlüsselung, die Zufallszahlenerzeugung und für weitere kryptographische Operationen eingesetzt. Für die Ausführung von Operationen auf der Chipkarte und für den Zugriff auf Daten der Chipkarte ist in der Regel die Eingabe einer persönlichen Identifikationsnummer (PIN) durch einen Benutzer notwendig. Für einen Angreifer, der keine Kenntnis der PIN hat, ist es nach anerkannter wissenschaftlicher Meinung unmöglich, die Daten der Chipkarte auszulesen oder kryptographische Operationen zu starten und deren Ergebnisse zu ermitteln.

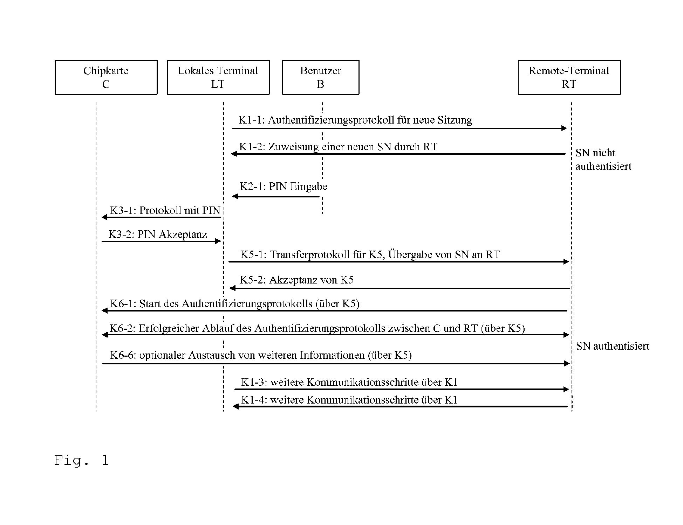

Typische Kommunikationsschritte zur Chipkartenbasierten Authentifizierung gegenüber einer Netzwerkentität, beispielsweise einem Remote-Terminal (RT), sind in Fig. 1 dargestellt.

Im Kommunikationsschritt K1-1 erfolgt ein erster Kontakt eines lokalen Terminals LT mit der Kommunikationseinrichtung RT für eine neue Sitzung. Der Kanal K1 ist durch den Protokollablauf K1-1 einseitig authentisch in Bezug auf die Authentifizierung von Kommunikationseinrichtung RT gegenüber dem LT und verschlüsselt und integritätsgeschützt mit Hilfe von beispielsweise dem TLS-Protokoll mit dem Zertifikat von RT, wie es in T. Dierks, E. Rescorla. "The Transport Layer Security (TLS) Protocol Version 1.1". IETF RFC 4346, April 2006, beschrieben ist.

Eine Authentifizierung des Benutzers oder des LT gegenüber der Kommunikationseinrichtung RT hat in dem vorstehend beschriebenen Schritt noch nicht stattgefunden und wird erst im Schritt K6-1 mittels der Chipkarte C erfolgen. In dem Schritt K1-2 wird dem LT eine Sitzungsnummer SN vom Kommunikationseinrichtung RT über den Kanal K1 zur Kennzeichnung der aktuellen Sitzung zugewiesen. Der Kanal K1 wird, nachdem auch eine Authentifizierung des Benutzers B mittels Chipkarte C gegenüber der Kommunikationseinrichtung RT erfolgt ist, für die Nutzung von Diensten bei Kommunikationseinrichtung RT in den weiteren Kommunikationsschritten K1-3, K1-4, ... genutzt. Da die Sitzungsnummer SN über K1 übertragen wird, kann sie nicht durch einen Angreifer im Klartext gelesen oder modifiziert werden.

Eine Sitzungsnummer SN muss durch die Kommunikationseinrichtung RT zufällig gewählt werden und hat nur eine begrenzte zeitliche Gültigkeit. Die Sitzungsnummer SN kann hierbei eine zufällige Zahl oder eine zufällige Zeichenkette mit einer endlichen Länge sein. Durch die Zufälligkeit der Sitzungsnummer SN sollen Wiedereinspielungsangriffe der Sitzungsnummer SN oder die Übernahme einer Sitzung durch einen Angreifer verhindert werden. Über die Sitzungsnummer SN werden weitere Kommunikationsschritte des Kanals K1 zwischen LT und Kommunikationseinrichtung RT gekennzeichnet, so dass diese eindeutig einer Kommunikationssitzung bei Kommunikationseinrichtung RT bzw. LT zugeordnet werden können. Die Kommunikationssitzung mit der Sitzungsnummer SN hat im Schritt K1-2 zunächst den Zustand 0 (nicht authentifiziert) im Sitzungsmanagement von RT.

Im Schritt K2-1 erfolgt die Eingabe der PIN des Benutzers B am LT. In diesem Schritt kann der Benutzer B optional die Zugriffsrechte des Kommunikationseinrichtung RT auf der Chipkarte C einschränken. Im Schritt K3 erfolgt zwischen LT und Chipkarte C die gegenseitige Prüfung der Kenntnis der PIN. Wird die Chipkarte C über ein kontaktloses Übertragungsverfahren angesprochen, so sollte K3 ein verschlüsselter und authentischer Kanal sein. Beispielsweise verkörpert K3 das PACE Protokoll und ist ein verschlüsselter und authentischer Kanal, wobei LT und Chipkarte C sich mit Kenntnis der PIN gegenseitig authentisiert haben.

Im Schritt K5 werden ein Kommunikationskanal zwischen dem lokalen Terminal LT und der Kommunikationseinrichtung RT etabliert und die Sitzungsnummer SN an die Kommunikationseinrichtung RT übergeben. Der Schritt K5 wird genutzt, um die Kommunikation K6 zwischen der Chipkarte C und der Kommunikationseinrichtung RT zu transportieren. Der Kanal K1 kann für diesen Zweck in den meisten Anwendungen nicht benutzt werden, so dass mit K5 ein neuer Kommunikationskanal etabliert werden muss. In einer Ausführungsform kann der Kommunikationsendpunkt RT für die Kommunikationskanäle K1 und K5 auch in zwei physikalisch getrennten Kommunikationsendpunkten RT-1 und RT-5 enden. Im Folgenden wird ohne Einschränkung der Allgemeinheit von einem Kommunikationsendpunkt bzw. einer Kommunikationseinrichtung RT ausgegangen.

Chipkarten verfügen in der Regel nicht über eine eigene Implementierung für den Transport von Protokollnachrichten über IP-basierte Netze, so dass der Nachrichtentransport zwischen der Chipkarte C und der Kommunikationseinrichtung RT unter Zuhilfenahme von dem LT und dem Kanal K5 durchgeführt wird.

Mit K6 ist ein Kommunikationskanal zwischen Chipkarte C und Kommunikationseinrichtung RT bezeichnet, der über den Kanal K5 zwischen dem LT und der Kommunikationseinrichtung RT transportiert wird. Im Schritt K6-1 läuft ein Authentifizierungsprotokoll zur Etablierung eines gegenseitig authentisierten und verschlüsselten Kanals zwischen der Chipkarte C und der Kommunikationseinrichtung RT ab. Im Schritt K6-6 können weitere Informationen zwischen der Chipkarte C und der Kommunikationseinrichtung RT optional ausgetauscht werden.

K6-1 und K6-2 können gemäß der Schrift von BSI, "Advanced Security Mechanismus for maschine Readable Travel Documents - Extended Access Control (EAC)", Technical Guideline TR-03110, Version 2.0 RC, März 2008, eine Abfolge von Terminal Authentication, Passive Authentication, Chip Authentication und Secure Messaging nach ISO/IEC 7816-8, *"*Identification cards - Integrated circuit(s) cards - Part 8: Commands for security Operations", 2004, sein. Hierbei werden zwischen der Chipkarte C und der Kommunikationseinrichtung RT die APDUs (Application Data Protocol Unit) unter Zuhilfenahme des Kanals K5 transportiert.

Nachdem der Schritt K6-2 erfolgreich durchgeführt wurde, wird beim Sitzungsmanagement der Kommunikationseinrichtung RT der Zustand der Sitzungsnummer SN von 0 auf 1 (authentisiert) gesetzt, und der Zustand der Kommunikationsverbindung K1 wird als gegenseitig authentisiert gesetzt. Somit ist der Kanal K1 ein verschlüsselter und gegenseitig authentisierter Kommunikationskanal, bei dem mit K1-3, K1-4, ... weitere Kommunikationsschritte zwischen dem LT und der Kommunikationseinrichtung RT zur Erbringung eines Dienstes durchgeführt werden können.

Ein Angreifer A, der auf dem Kommunikationspfad zwischen dem LT und der Kommunikationseinrichtung RT platziert ist, kann jedoch die in K5-1 kommunizierte Sitzungsnummer SN abhören bzw. unbemerkt modifizieren, falls der Kommunikationskanal K5 nicht verschlüsselt bzw. integritätsgeschützt ist. Der Angreifer kann dann eine abgehörte Sitzungsnummer SN im Zustand 1 (authentisiert) des Benutzers B benutzen, um unter der Identität des Benutzers B Dienste der RT zu nutzen. Es ist somit ein Missbrauch durch den Angreifer A möglich. Auch wenn die Sitzungsnummer SN nur eine begrenzte zeitliche Gültigkeit hat, so kann der Angreifer A dies ausnutzen, um dem Benutzer B und der Kommunikationseinrichtung RT Schaden zuzufügen.

Im Kommunikationsschritt K6-6 hat die Kommunikationseinrichtung RT die Möglichkeit, Informationen aus Chipkarte C auszulesen, Informationen auf Chipkarte C zu schreiben oder Funktionen auf Chipkarte C auszuführen und deren Ergebnisse zu erhalten. Die Zugriffsrechte von Kommunikationseinrichtung RT können hierbei z.B. durch Terminal-Zertifikate bzw. Berechtigungszertifikate geregelt werden. In den Terminal-Zertifikaten sind die Zugriffsrechte für die Kommunikationseinrichtung RT authentisch hinterlegt, so dass die Chipkarte C durch das Verifizieren der Signatur zum Terminal-Zertifikat und der damit verbundenen Zertifikatskette die Gültigkeit prüfen kann. Im Falle des elektronischen Personalausweises (ePA) sind diese die Terminal-Zertifikate, wie sie in BSI, "Advanced Security Mechanisms for Machine Readable Travel Documents - Extended Access Control (EAC)", Technical Guideline TR-03110, Version 2.0 RC, März 2008, beschrieben sind. Die Übergabe von Zugriffsrechten von der Kommunikationseinrichtung RT an Chipkarte C wird derzeit im Schritt K6-1 mittels der Terminal-Zertifikate durchgeführt. Der Benutzer B hat zusätzlich im Schritt K2-1 die Möglichkeit, die effektiven Zugriffsrechte der Kommunikationseinrichtung RT einzuschränken.

Der Erfindung liegt die Aufgabe zugrunde, ein sichereres Chipkarten-basiertes Authentifizierungsverfahren zu schaffen, bei dem keine kryptographischen Anforderungen an den Kommunikationskanal K5 gestellt werden und dennoch ein sicheres Sitzungsmanagement möglich ist.

Erfindungsgemäß werden Sicherheitsanforderungen von dem LT in die Chipkarte C verlagert, so dass der Benutzer auf die Zuverlässigkeit der Implementierung von Sicherheitsmechanismen im LT nicht vertrauen muss. Dabei wird insbesondere eine kryptographische Bindung zwischen in Fig. 1 dargestellten Pfaden K1 und K6 hergestellt, die gegenwärtig nicht vorliegt.

Diese Aufgabe wird durch die Merkmale der unabhängigen Ansprüche gelöst. Vorteilhafte Ausführungsbeispiele sind in den abhängigen Ansprüchen angegeben.

Die Erfindung betrifft insbesondere die Authentifizierungsfunktion einer Chipkarte C gegenüber einer Anwendung, die über ein Netzwerk, z.B. ein IPbasiertes Netzwerk, erreichbar ist. Damit ein Benutzer B einen Dienst der Anwendung RT nutzen kann, ist zunächst eine Authentifizierung des Benutzers gegenüber der Anwendung RT notwendig. Hierbei stehen Anwendungen im Mittelpunkt, die ein Sitzungsmanagement in Form von Sitzungsnummern SN oder Sitzungszeichenketten verwenden, wobei im Folgenden beispielhaft der Begriff "Sitzungsnummer" verwendet wird. Typischerweise verwenden HTTP-basierte (HTTP: Hypertext Transfer Protocol) oder auch http-über-TLS-basierte (TLS: Transport Layer Security) Anwendungen Sitzungsnummern, um die einzelnen Dienstanfragen von Benutzern zu unterscheiden oder die Anfragen eines Benutzers in den Kontext der betreffenden Sitzung zusammenzuführen. Da das HTTP ein zustandsloses Protokoll ist, werden Sitzungsnummern zur Zuordnung von Anfragen zu einer Sitzung herangezogen. Die Erfindung beschränkt sich aber nicht nur auf HTTP-basierte Anwendungen, sondern sie betrifft auch netzbasierte Anwendungen mit Sitzungen. Eine Sitzungsnummer hat beispielsweise eine Länge von mehr als 100 bit, so dass diese nur mit einer geringen Wahrscheinlichkeit von einem Angreifer erraten werden können. Chipkarten kommunizieren entweder kontaktbehaftet oder kontaktlos mit einem Kartenlesegerät, das am Rechner des Benutzers B angeschlossen ist.

Für die Übertragung zwischen Chipkarte und Kartenlesegerät existieren internationale standardisierte Protokolle bei der ISO/IEC. Für kontaktbehaftete Chipkarten finden hierzu die Standards aus der Reihe ISO/IEC 7816, "Identification cards - Integrated circuit(s) cards with contacts", Teile 1 - 11, 2007, und für kontaktlose die Standards aus ISO/IEC 14443, "*Identification cards - Contactless integrated circuit(s) cards - Proximity cards*", Teile 1 - 4, 2001, Anwendung. Kommandos und Dateistrukturen für kontaktbehaftete und kontaktlose Chipkarten sind ebenfalls in der Reihe ISO/IEC 7816, "Identification cards - Integrated circuit(s) cards with contacts", Teile 1 - 11, 2007, normiert.

Zwischen dem lokalen Terminal LT und der Chipkarte C bzw. der Kommunikationseinrichtung RT, welche ein entferntes Terminal sein kann, und der Chipkarte C werden die Daten in der Kommunikationsform Anfrage/Antwort (Request/Response) ausgetauscht. Hierbei stellt das LT eine Anfrage und die Chipkarte C antwortet mit einem Ergebnis. Die zu übertragenden Daten zwischen dem LT und der Chipkarte C bzw. der Kommunikationseinrichtung RT und der Chipkarte C werden in der Regel in so genannten APDU nach ISO/IEC 7816-*4,* "Identification cards - Integrated circuit(s) cards - Part 4: Organization, security and commands for interchange", 2005, transportiert.

Der Benutzer und Besitzer B einer Chipkarte C gibt je nach Ausführung des Chipkartenlesegeräts und dem erforderlichen Sicherheitsniveau die PIN an seinem Rechner oder Chipkartenlesegerät LT ein, um Operationen mit der Chipkarte durchzuführen. Im Weiteren wird ohne Einschränkung davon ausgegangen, dass der Benutzer B die PIN am LT eingibt.

Die Erfindung betrifft ein Chipkarten-basiertes Authentifikationsverfahren mit Übermitteln einer Sitzungsnummer an eine Chipkarte, Berechnen eines kryptographischen Funktionswertes in Abhängigkeit von der Sitzungsnummer durch die Chipkarte und Übermitteln des kryptographischen Funktionswertes durch die Chipkarte an eine Kommunikationseinrichtung, beispielsweise ein lokales oder ein entferntes Terminal, zur Authentifizierung gegenüber der Kommunikationseinrichtung.

Gemäß einer Ausführungsform wird der kryptographische Funktionswert unter Verwendung einer nicht-umkehrbaren kryptographischen Funktion, insbesondere einer Hash-Funktion, berechnet.

Gemäß einer Ausführungsform wird der kryptographische Funktionswert in Abhängigkeit von der Sitzungsnummer und von einem kryptographischen Schlüssel, insbesondere einem in einem vorhergehenden Schritt durch die Chipkarte abgeleiten kryptographischen Schlüssel, berechnet.

Gemäß einer Ausführungsform umfasst das Chipkarten-basierte Authentifikationsverfahren den Schritt des Empfangens des kryptographischen Funktionswertes durch die Kommunikationseinrichtung, des Berechnens eines weiteren kryptographischen Funktionswertes, insbesondere eines Hash-Funktionswertes, welcher zu dem kryptographischen Funktionswert korrespondiert, in Abhängigkeit von der Sitzungsnummer oder in Abhängigkeit von der Sitzungsnummer und einem kryptographischen Schlüssel, insbesondere einem in einem vorhergehenden Schritt durch die Kommunikationseinrichtung abgeleiten kryptographischen Schlüssel, und den Schritt des Vergleichens des kryptographischen Funktionswertes mit dem weiteren kryptographischen Wert, um den kryptographischen Funktionswert zu verifizieren.

Gemäß einer Ausführungsform umfasst das Chipkarten-basierte Authentifikationsverfahren den Schritt des Berechnens eines weiteren kryptographischen Funktionswertes, insbesondere eines Hash-Funktionswertes, in Abhängigkeit von der Sitzungsnummer oder in Abhängigkeit von der Sitzungsnummer und einem kryptographischen Schlüssel, insbesondere einem in einem vorhergehenden Schritt durch die Kommunikationseinrichtung abgeleiten kryptographischen Schlüssel, durch die Kommunikationseinrichtung, und den Schritt des Übermittelns des weiteren kryptographischen Funktionswertes an die Chipkarte durch die Kommunikationseinrichtung zur Authentifizierung der Kommunikationseinrichtung gegenüber der Chipkarte.

Gemäß einer Ausführungsform umfasst das Chipkarten-basierte Authentifikationsverfahren den Schritt des Übermittelns einer Authentifikationsinformation, insbesondere einer persönlichen Identifikationsnummer, an die Chipkarte und den Schritt des Initialisierens der Chipkarte mit der Sitzungsnummer bei erfolgreicher Verifikation der Authentifikationsinformation.

Gemäß einer Ausführungsform umfasst das Chipkarten-basierte Authentifikationsverfahren den Schritt des Übermittelns einer Authentifikationsinformation, insbesondere einer persönlichen Identifikationsnummer, zur Verifikation an die Chipkarte, den Schritt des Initialisierens der Chipkarte mit der Sitzungsnummer bei erfolgreicher Verifikation der Authentifikationsinformation und den Schritt des Aufbauens einer Kommunikationsverbindung, insbesondere einer verschlüsselten Kommunikationsverbindung, zwischen der Chipkarte und der Kommunikationseinrichtung zur Authentifizierung gegenüber der Kommunikationseinrichtung bei erfolgreicher Verifikation der Authentifikationsinformation.

Gemäß einer Ausführungsform umfasst das Chipkarten-basierte Authentifikationsverfahren den Schritt des insbesondere temporären Speicherns der Sitzungsnummer in der Chipkarte.

Gemäß einer Ausführungsform umfasst das Chipkarten-basierte Authentifikationsverfahren den Schritt des Übermittelns einer Authentifikationsinformation, insbesondere einer persönlichen Identifikationsnummer, zur Verifikation an die Chipkarte und den Schritt des Initialisierens der Chipkarte mit der Sitzungsnummer bei erfolgreicher Verifikation der Authentifikationsinformation, wobei das Übermitteln des kryptographischen Funktionswertes durch die Chipkarte an die Kommunikationseinrichtung nur bei erfolgreicher Verifikation der Authentifikationsinformation durchgeführt wird.

Gemäß einer Ausführungsform wird die Kommunikation zwischen der Chipkarte und der Kommunikationseinrichtung unter Verwendung des Internetprotokolls aufgebaut.

Die Erfindung betrifft ferner eine elektronische Chipkarte mit einem Empfänger zum Empfangen einer Sitzungsnummer, einem Speicher zum Speichern der Sitzungsnummer, einem Prozessor zum Berechnen eines kryptographischen Funktionswertes in Abhängigkeit von der Sitzungsnummer und einem Sender zum Übermitteln des kryptographischen Funktionswertes an eine Kommunikationseinrichtung zur Authentifizierung gegenüber der Kommunikationseinrichtung.

Gemäß einer Ausführungsform ist der Prozessor ausgebildet, den kryptographischen Funktionswert unter Verwendung einer nicht-umkehrbaren kryptographischen Funktion, insbesondere einer Hash-Funktion, zu berechnen.

Gemäß einer Ausführungsform ist der Prozessor ausgebildet, den kryptographischen Funktionswert in Abhängigkeit von der Sitzungsnummer und von einem kryptographischen Schlüssel zu berechnen.

Gemäß einer Ausführungsform sind der Sender und der Empfänger zum Ausführen des Internetprotokolls eingerichtet.

Die Erfindung betrifft ferner ein Computerprogramm zur Ausführung des erfindungsgemäßen Verfahrens, wenn das Computerprogramm auf einem Computer abläuft.

Ferner sind alle erfindungsgemäßen Ausführungsbeispiele und Ausführungsformen sowie deren Teilaspekte und Teilschritte frei kombinierbar.

Die Erfindung wird nachfolgend anhand von Ausführungsbeispielen in Verbindung mit den beiliegenden Zeichnungen näher erläutert. Es zeigen:
Fig. 1 einen Kommunikationsablauf zur Authentifizierung gegenüber einer Kommunikationeinrichtung;
Fig. 2 einen Kommunikationsablauf zur Authentifizierung gegenüber einer Kommunikationeinrichtung; und
Fig. 3 ein Blockdiagramm einer elektronischen Chipkarte.

Im Folgenden bezeichnet Ki einen Kommunikationskanal und Ki-j eine Nachricht oder eine Menge von Nachrichten auf dem Kommunikationskanal Ki. Dabei ist zu berücksichtigen, dass hier im Folgenden beispielhaft nicht alle Nachrichten über einen Kommunikationskanal dargestellt werden.

H ist eine kryptographische Einwegfunktion mit der Eigenschaft, dass aus der Kenntnis von y = H(x) ein Angreifer x nicht effizient ermitteln kann. H kann zum Beispiel durch eine kryptographische Hashfunktion realisiert sein. Beispiele finden sich in Alfred J. Menezes, Paul C. van Oorschot, Scott A. Vanstone, "*Handbook of Applied Cryptography*", CRC Press Series on Discrete Mathematics and its Application, 1996. Das Symbol "|" stellt die Aneinanderreihung bzw. eine Konkatenation von Zeichenketten dar.

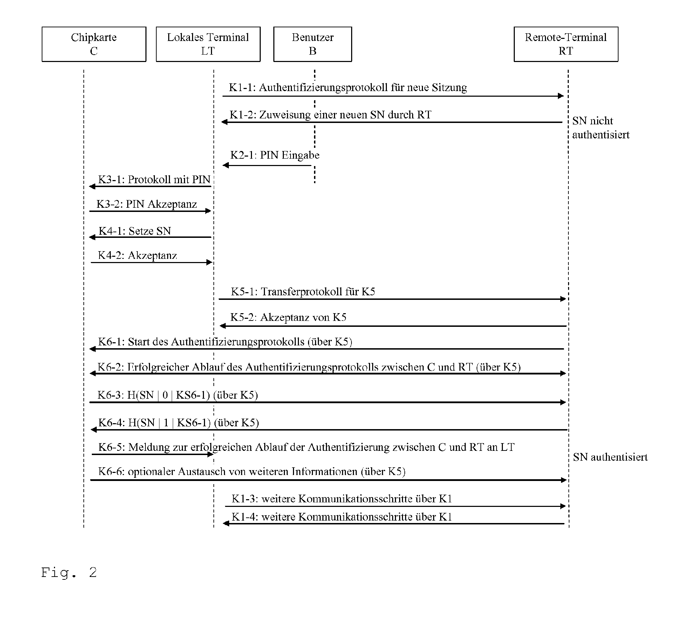

In der Fig. 2 ist das erfindungsgemäße Verfahren detaillierter dargestellt. Im Unterschied zu den in Fig. 1 dargestellten Abläufen umfasst die Chipkarte C zusätzlichen temporären Speicherplatz, in dem eine Sitzungsnummer SN gespeichert werden kann. Dieser Wert kann beispielhaft in einem nicht dauerhaften Speicher in der Chipkarte C gehalten werden, sodass der Speicherplatz für die Sitzungsnummer SN auf der Chipkarte C gelöscht wird bzw. auf einen undefinierten Wert gesetzt wird, wenn die Stromversorgung für die Chipkarte C entfernt wird oder eine Authentifizierung mit der PIN durchgeführt wird.

Bezug nehmend auf das in Fig. 2 dargestellte Ausführungsbeispiel kann bei einer Initialisierung der Chipkarte C durch ein Chipkartenlesegerät bzw. durch ein lokales Terminal LT und nach einem erfolgreichen Kommunikationsschritt K3-2 die Sitzungsnummer SN auf der Chipkarte C auf 0 bzw. auf einen nicht definierten Wert gesetzt werden. Nach erfolgreichem Schritt K3-2 kann die Sitzungsnummer SN durch das LT neu im Schritt K4-1 gesetzt werden. Der Wert der Sitzungsnummer SN kann in der Chipkarte temporär gespeichert werden, wobei die Übermittlung von H(SN | 0 | KS-6) aus der Chipkarte C beispielsweise nur nach dem erfolgreichen Ablauf des Authentifizierungsprotokolls K6 möglich ist. Hierbei ist zu berücksichtigen, dass K4 kein neuer Kommunikationskanal zwischen dem LT und der Chipkarte C ist, sondern der bestehende Kommunikationskanal K3 genutzt werden kann.

Im Kommunikationsschritt K5 wird ein beliebiger Kommunikationskanal zwischen dem LT und der Kommunikationseinrichtung RT (RT: Remote Terminal) aufgebaut. Es werden keine Sicherheitsanforderungen an K5 gestellt. Im Kommunikationsschritt K5-1 muss nicht mehr die Sitzungsnummer SN vom LT an die Kommunikationseinrichtung RT übergeben werden. Der Kommunikationsschritt K6-1 kann wie vorstehend beschrieben ausgeführt werden. Im Kommunikationsschritt K6-2 wird die gegenseitige Authentifizierung zwischen der Kommunikationseinrichtung RT und der Chipkarte C durchgeführt. Die Kommunikationseinrichtung RT authentifiziert sich dabei beispielsweise vorteilhaft mit einem Terminal-Zertifikat, in dem Zugriffsrechte authentisch hinterlegt sind. Dies geschieht z.B. im Fall des ePA durch Terminal-Zertifikate, die in BSI, "Advanced Security Mechanisms for Machine Readable Travel Documents - Extended Access Control (EAC)", Technical Guideline TR-03110, Version 2.0 RC, März 2008, beschrieben sind.

Nach erfolgreichem Ablauf von K6-2 ist ein verschlüsselter und authentischer Kommunikationskanal zwischen Kommunikationseinrichtung RT und Chipkarte C etabliert und es können die weiteren Schritte K6-3, K6-4 und K6-5 durchgeführt werden.

Die Chipkarte C übergibt beispielsweise H(SN | 0 | KS-6) an die Kommunikationseinrichtung RT über einen verschlüsselten und authentischen Kommunikationskanal K6 im Schritt K6-3. Dies kann z.B. dadurch erfolgen, dass die Kommunikationseinrichtung RT zunächst eine Anfrage für die Ausführung von K6-3 an die Chipkarte C übermittelt und die Chipkarte C diese Anfrage beantwortet. Alternativ kann die Chipkarte C die Meldung aus K6-3 im Schritt K6-2 automatisch übermitteln.

Die Kommunikationseinrichtung RT kann mittels H(SN | 0 KS-6) in der lokalen Sitzungstabelle die Sitzungsnummer SN identifizieren. Damit nun auch die Chipkarte C die kryptographische Bindung zwischen K1 und K6 herstellen kann, übermittelt die Kommunikationseinrichtung RT an die Chipkarte C beispielsweise den Wert H(SN | 1 | KS-6) im Schritt K6-4. Die Chipkarte C prüft anhand der gespeicherten Sitzungsnummer, ob der in Schritt K6-4 übermittelte Wert mit H(SN | 1 | KS-6) übereinstimmt. Eine Kommunikationseinrichtung bzw. ein entferntes Terminal, das den Wert der Sitzungsnummer SN nicht kennt, kann aus H(SN | 0 | KS-6) nicht den Wert der Sitzungsnummer SN oder KS-6 bestimmen und somit nicht der Chipkarte C den korrekten Wert SN übermitteln.

Da die Kommunikationseinrichtung RT bei Empfang von H(SN | 0 | KS-6) in Schritt K6-3 im ungünstigen Fall alle Sitzungsnummern in der Liste der aktuell gültigen Sitzungsnummern prüfen muss, ist es sinnvoll, die Sitzungsnummer SN in einen öffentlichen Teil SN-1 und einen geheimen Teil SN-2 aufzuteilen mit SN = SN-1 | SN-2. Hierbei muss der geheime Teil SN-2 noch eine ausreichende Länge besitzen, damit keine Angriffe möglich sind. Im Schritt K6-3 wird dann alternativ SN-1 | H(SN | 0 | KS-6) übertragen. Dadurch verringert sich die Liste der Sitzungen, die die Kommunikationseinrichtung RT prüfen muss.

Entfallen in einer Anwendung das Setzen der Sitzungsnummer SN im Schritt K4-1, so entfallen die Schritte K6-3 und K6-4. Anfragen von der Kommunikationseinrichtung RT an die Chipkarte C bzgl. der Ausführung des Schritte K6-3 werden in diesem Fall mit einer Fehlermeldung beantwortet.

Nach erfolgreicher Prüfung meldet die Chipkarte C an das LT die erfolgreiche Durchführung der Authentifizierung in Schritt K6-5. Die Kommunikationseinrichtung RT kann nun den Sitzungszustand von Sitzungsnummer SN auf 1 (authentisiert) setzen.

Somit müssen an den Kommunikationskanal K5 keine Anforderungen bezüglich dessen kryptographischen Eigenschaften gestellt werden, da die Sitzungsnummer SN von der Chipkarte C über den verschlüsselten und authentischen Kommunikationskanal K6 übertragen wird. Ein Angreifer hat nicht die Möglichkeit, die Sitzungsnummer SN abzuhören, unbemerkt zu modifizieren oder die Sitzungsnummer einer anderen Sitzung einzuspielen.

Das erfindungsgemäße Verfahren zur Einbindung der Sitzungsnummer SN in die Kommunikation zwischen der Chipkarte C und der Kommunikationseinrichtung RT kann z.B. bei den Authentifizierungsverfahren für den ePA (elektronischen Personalausweis) oder für eine Europäische Bürgerkarte, die als ECC oder eID-Card bezeichnet wird, mit einem Kommunikationseinrichtung RT eingesetzt werden.

Erfindungsgemäß kann eine gegenseitige Verifikation einer Authentifikationsinformation zwischen der Chipkarte C und der Kommunikationseinrichtung RT durchgeführt werden, wobei dem die Chipkarte C zunächst mit der Sitzungsnummer SN initialisiert wird. Daraufhin werden eine gegenseitige Authentifizierung zwischen der Kommunikationseinrichtung RT und der Chipkarte C sowie eine gegenseitige Verifikation der Sitzungsnummer SN nach dem erfolgreichen Ablauf der Authentifizierung zwischen der Kommunikationseinrichtung RT und der Chipkarte C durchgeführt.

Die Sitzungsnummer SN kann ein zufälliger Wert wein, der beispielsweise von der Kommunikationseinrichtung RT bestimmt und über einen verschlüsselten und integren Kommunikationskanal von der Kommunikationseinrichtung RT an beispielsweise das lokale Terminal LT, das mit der Chipkarte C zusammenwirkt, übertragen wird. Nach erfolgreicher Verifikation der Authentifikationsinformation durch die Chipkarte C wird die Sitzungsnummer SN von dem lokalen Terminal LT an die Chipkarte C übertragen und dort temporär zwischengespeichert. Ferner kann bei erfolgreicher Verifikation der Authentifikationsinformation und dem Setzen der Sitzungsnummer SN nachfolgend die Chipkarte C gegenüber der Kommunikationseinrichtung RT unter Verwendung eines Authentifizierungsprotokolls authentifiziert werden, wobei mit der Kommunikationseinrichtung RT eine gegenseitige Authentifizierung durchgeführt werden kann. Dazu kann ein Terminal-Zertifikat verwendet werden, in dem dessen Rechte für den Zugriff auf Daten und Funktionen auf der Chipkarte C hinterlegt sind.

Nach erfolgreichem Ablauf der Authentifizierung kann eine Kommunikationsverbindung, insbesondere eine verschlüsselte und authentifizierte Kommunikationsverbindung, zwischen der Chipkarte C und der Kommunikationseinrichtung RT aufgebaut werden. Insbesondere wird bei erfolgreicher gegenseitiger Authentifizierung der Wert H(SN | 0 | KS-6) der von der Chipkarte C zu der Kommunikationseinrichtung RT im Schritt K6-3 übertragen wird, wobei anschließend der Wert H(SN | 1 | KS-6) von der Kommunikationseinrichtung RT zu der Chipkarte C übertragen wird, wodurch die gegenseitige Kenntnis der Sitzungsnummer SN und die kryptographische Bindung zwischen K6 und K1 hergestellt werden. Hierbei umfasst der Wert KS-6 beispielsweise Parameter und Schlüsselinformationen, die nach dem erfolgreichen Ablauf des Authentifizierungsprotokolls in den Schritten K6-1 und K6-2 zwischen der Chipkarte C und der Kommunikationseinrichtung RT gebildet wurden und nur der Chipkarte C und der Kommunikationseinrichtung RT bekannt sind.

Wie vorstehend erwähnt kann die Kommunikationseinrichtung RT ein entferntes Terminal sein, wobei die Authentifikationsinformation durch das lokale Terminal LT, insbesondere durch ein Chipkartenlesegerät, an die Chipkarte C übertragen werden kann.

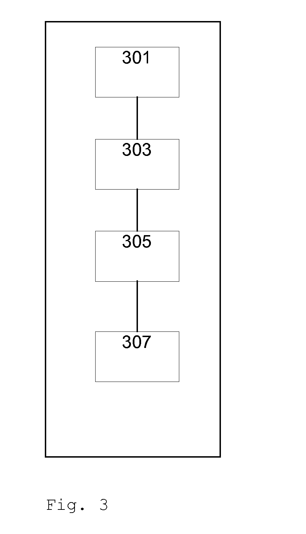

In Fig. 3 ist ein Blockdiagramm einer Chipkarte gezeigt, welche insbesondere programmtechnisch eingerichtet ist und die vorstehend beschriebene Funktionalität aufweist. Die Chipkarte kann hierzu einen Empfänger 301 zum Empfangen der Sitzungsnummer SN, einen Speicher 303 zum Speichern der Sitzungsnummer, einen Prozessor 305 zum Berechnen des kryptographischen Funktionswertes in Abhängigkeit von der Sitzungsnummer und einen Sender 307 zum Übermitteln des kryptographischen Funktionswertes an eine Kommunikationseinrichtung zur Authentifizierung gegenüber der Kommunikationseinrichtung umfassen.

## Patentansprüche

1. Chipkarten-basiertes Authentifikationsverfahren, mit:
Übermitteln (K4-2) einer Sitzungsnummer (SN) an eine Chipkarte;
Berechnen eines kryptographischen Funktionswertes in Abhängigkeit von der Sitzungsnummer (SN) durch die Chipkarte; und
Übermitteln (K6-3) des kryptographischen Funktionswertes durch die Chipkarte an eine Kommunikationseinrichtung zur Authentifizierung gegenüber der Kommunikationseinrichtung.

2. Chipkarten-basiertes Authentifikationsverfahren gemäß Anspruch 1, wobei der kryptographische Funktionswert unter Verwendung einer nicht-umkehrbaren kryptographischen Funktion, insbesondere einer Hash-Funktion, berechnet wird.

3. Chipkarten-basiertes Authentifikationsverfahren gemäß einem der vorstehenden Ansprüche, wobei der kryptographische Funktionswert in Abhängigkeit von der Sitzungsnummer (SN) und von einem kryptographischen Schlüssel (KS6-1), insbesondere einem in einem vorhergehenden Schritt (K6-1, K6-2) durch die Chipkarte abgeleiten kryptographischen Schlüssel (KS6-1), berechnet wird.

4. Chipkarten-basiertes Authentifikationsverfahren gemäß einem der vorstehenden Ansprüche, mit:
Empfangen des kryptographischen Funktionswertes durch die Kommunikationseinrichtung;
Berechnen eines weiteren kryptographischen Funktionswertes, insbesondere eines Hash-Funktionswertes, welcher zu dem kryptographischen Funktionswert korrespondiert, in Abhängigkeit von der Sitzungsnummer (SN) oder in Abhängigkeit von der Sitzungsnummer (SN) und einem kryptographischen Schlüssel (KS6-1), insbesondere einem in einem vorhergehenden Schritt (K6-1, K6-2) durch die Kommunikationseinrichtung abgeleiten kryptographischen Schlüssel (KS6-1); und
Vergleichen des kryptographischen Funktionswertes mit dem weiteren kryptographischen Wert, um den kryptographischen Funktionswert zu verifizieren.

5. Chipkarten-basiertes Authentifikationsverfahren gemäß einem der vorstehenden Ansprüche, mit:
Berechnen eines weiteren kryptographischen Funktionswertes, insbesondere eines Hash-Funktionswertes, in Abhängigkeit von der Sitzungsnummer (SN) oder in Abhängigkeit von der Sitzungsnummer (SN) und einem kryptographischen Schlüssel (KS6-1), insbesondere einem in einem vorhergehenden Schritt (K6-1, K6-2) durch die Kommunikationseinrichtung abgeleiten kryptographischen Schlüssel, durch die Kommunikationseinrichtung; und
Übermitteln (K6-4) des weiteren kryptographischen Funktionswertes an die Chipkarte durch die Kommunikationseinrichtung zur Authentifizierung der Kommunikationseinrichtung gegenüber der Chipkarte.

6. Chipkarten-basiertes Authentifikationsverfahren gemäß einem der vorstehenden Ansprüche, mit:
Übermitteln (K3-1) einer Authentifikationsinformation, insbesondere einer persönlichen Identifikationsnummer (PIN), an die Chipkarte; und
Initialisieren (K4-1) der Chipkarte mit der Sitzungsnummer (SN) bei erfolgreicher Verifikation der Authentifikationsinformation.

7. Chipkarten-basiertes Authentifikationsverfahren gemäß einem der vorstehenden Ansprüche, mit:
Übermitteln (K3-1) einer Authentifikationsinformation, insbesondere einer persönlichen Identifikationsnummer (PIN), zur Verifikation an die Chipkarte;
Initialisieren (K4-1) der Chipkarte mit der Sitzungsnummer (SN) bei erfolgreicher Verifikation der Authentifikationsinformation; und
Aufbauen (K5-1, K5-2) einer Kommunikationsverbindung, insbesondere einer verschlüsselten Kommunikationsverbindung, zwischen der Chipkarte und der Kommunikationseinrichtung zur Authentifizierung gegenüber der Kommunikationseinrichtung bei erfolgreicher Verifikation der Authentifikationsinformation.

8. Chipkarten-basiertes Authentifikationsverfahren gemäß einem der vorstehenden Ansprüche, mit:
Speichern, insbesondere temporär, der Sitzungsnummer (SN) in der Chipkarte.

9. Chipkarten-basiertes Authentifikationsverfahren gemäß einem der vorstehenden Ansprüche, mit:
Übermitteln (K3-1) einer Authentifikationsinformation, insbesondere einer persönlichen Identifikationsnummer (PIN), zur Verifikation an die Chipkarte; und
Initialisieren (K4-1) der Chipkarte mit der Sitzungsnummer (SN) bei erfolgreicher Verifikation der Authentifikationsinformation; wobei
das Übermitteln (K6-3) des kryptographischen Funktionswertes durch die Chipkarte an die Kommunikationseinrichtung nur bei erfolgreicher Verifikation der Authentifikationsinformation durchgeführt wird.

10. Chipkarten-basiertes Authentifikationsverfahren gemäß einem der vorstehenden Ansprüche, wobei die Kommunikation zwischen der Chipkarte und der Kommunikationseinrichtung unter Verwendung des Internetprotokolls aufgebaut wird.

11. Elektronische Chipkarte, mit:
einem Empfänger (301) zum Empfangen einer Sitzungsnummer (SN);
einem Speicher (303) zum Speichern der Sitzungsnummer (SN);
einem Prozessor (305) zum Berechnen eines kryptographischen Funktionswertes in Abhängigkeit von der Sitzungsnummer (SN); und
einem Sender (307) zum Übermitteln des kryptographischen Funktionswertes an eine Kommunikationseinrichtung zur Authentifizierung gegenüber der Kommunikationseinrichtung.

12. Elektronische Chipkarte gemäß Anspruch 12, wobei der Prozessor (305) ausgebildet ist, den kryptographischen Funktionswert unter Verwendung einer nicht-umkehrbaren kryptographischen Funktion, insbesondere einer Hash-Funktion, zu berechnen.

13. Elektronische Chipkarte gemäß Anspruch 12 oder 13, wobei der Prozessor (305) ausgebildet ist, den kryptographischen Funktionswert in Abhängigkeit von der Sitzungsnummer (SN) und von einem kryptographischen Schlüssel (KS6-1) zu berechnen.

14. Elektronische Chipkarte gemäß Anspruch 12, 13 oder 14, wobei der Sender (307) und der Empfänger (301) zum Ausführen des Internetprotokolls eingerichtet sind.

15. Computerprogramm zur Ausführung des Verfahrens gemäß einem der Ansprüche 1 bis 11, wenn das Computerprogramm auf einem Computer abläuft.
